# EUROPÄISCHE PATENTSCHRIFT

(11) **EP 1 259 308 B1**
(45) Veröffentlichungstag und Bekanntmachung des Hinweises auf die Patenterteilung: **12.11.2003**
(21) Anmeldenummer: 01915042.4
(22) Anmeldetag: 28.02.2001
(51) Int. Cl.: B01D 53/94, F01N 3/20

(54) **VERFAHREN UND ABGASREINIGUNGSANLAGE ZUR KATALYTISCHEN REDUKTION VON STICKOXIDEN IM ABGAS EINER VERBRENNUNGSANLAGE**
METHOD AND EMISSION CONTROL SYSTEM FOR CATALYTICALLY REDUCING NITROGEN OXIDES IN THE EXHAUST GAS OF A COMBUSTION SYSTEM
PROCEDE ET INSTALLATION DE PURIFICATION DE GAZ D'ECHAPPEMENT POUR LA REDUCTION CATALYTIQUE D'OXYDES D'AZOTE CONTENUS DANS LES GAZ D'ECHAPPEMENT D'UNE INSTALLATION A COMBUSTION

(30) Priorität: 28.02.2000 DE 10009427
(43) Veröffentlichungstag der Anmeldung: 27.11.2002
(73) Patentinhaber: SIEMENS AKTIENGESELLSCHAFT, 80333 München (DE)
(72) Erfinder: FISCHER, Stefan, 96215 Lichtenfels (DE)
(74) Vertreter: Tergau & Pohl Patentanwälte
(86) Internationale Anmeldenummer: DE0100738
(87) Internationale Veröffentlichungsnummer: WO01064319

(56) Entgegenhaltungen:
- WO-A-00/29728
- US-A- 5 367 875

## Beschreibung

Die Erfindung betrifft ein Verfahren zur katalytischen Reduktion von Stickoxiden im Abgas einer Verbrennungsanlage, insbesondere eines Dieselmotors, wobei das Abgas zuerst über einen Oxidationskatalysator, der auf seiner dem Abgas zugänglichen Oberfläche Platin (Pt) sowie ggf. Palladium (Pd) und/oder Rhodium (Rh) umfasst, und anschließend über einen Reduktionskatalysator, der auf seiner dem Abgas zugänglichen Oberfläche Titandioxid (TiO₂), Wolframtrioxid (Wo₃), Vanadiumpentoxid (V₂O₅) sowie gegebenenfalls Molybdäntrioxid (MoO₃) umfasst, strömt und wobei dem Abgas ein Reaktionsmittel zugegeben wird. Ferner betrifft die Erfindung eine Abgasreinigungsanlage zur Durchführung des Verfahrens, mit einem Abgaskanal, mit einem vorgenannten Reduktionskatalysator, einem diesem vorgeschalteten Oxidationskatalysator der genannten Zusammensetzung und einer Einbringvorrichtung zum Einbringen des Reaktionsmittels in das Abgas.

Eine derartige Abgasreinigungsanlage und ein derartiges Verfahren sind aus den Artikeln "Abgasnachbehandlungssystem zur Erfüllung von Euro IV Grenzwerten bei PKW-Dieselmotoren" von Aust, Tost, Wißler, Fischer und Zürbig sowie NOx-Verminderung für Nutzfahrzeugmotoren mit Harnstoff-SCR-Kompaktsystemen (Gesteuerter Diesel-Katalysator, GD-KAT) von Jacob, Emmerling, Döring, Graf, Harris, van den Tillaart und Hupfeld aus VDI-Fortschrittsberichte, Reihe 12, Nr. 348, 1998, bekannt. Dabei wird das Reaktionsmittel dem Abgas - in Strömungsrichtung des Abgases gesehen - nach dem Oxidationskatalysator und vor dem Reduktionskatalysator beigemengt. Der Oxidationskatalysator hat dabei neben der Funktion der oxidativen Beseitigung von im Abgas enthaltenen Rußpartikeln und unverbrannten Kohlenwasserstoffen und Kohlenmonoxid die Funktion, das Verhältnis der im Abgas enthaltenen Stickoxide NO und NO₂ zugunsten von NO₂ zu verschieben. Am Oxidationskatalysator wird also Stickstoffmonoxid NO teilweise zu Stickstoffdioxid NO₂ oxidiert.

Der nach Durchströmen des Oxidationskatalysators im Abgas erhöhte Stickstoffdioxid-Anteil beschleunigt die katalytische Reaktion am Reduktionskatalysator und führt dadurch zu höheren Entstickungsraten. Bei der katalytischen Reaktion am Reduktionskatalysator handelt es sich um die sogenannte selektive katalytische Reduktion (SCR), gemäß derer im Abgas enthaltene Stickoxide, d. h. sowohl Stickstoffmonoxid als auch Stickstoffdioxid, unter Verbrauch eines Reduktionsmittels auch in Anwesenheit von Sauerstoff zu Stickstoff und Wasser umgesetzt werden. Die Beschleunigung der katalytischen Reaktion an einem SCR-Katalysator durch Erhöhung des relativen NO₂-Anteils ist aus der DE 28 32 002 B2 bekannt. Als Reduktionsmittel für die selektive katalytische Reduktion sind Ammoniak oder Kohlenwasserstoffe bekannt. Zur Einbringung von Ammoniak in das Abgas sind als Reaktionsmittel Ammoniak selbst, Ammoniakwasser oder Ammoniak freisetzende Stoffe wie Harnstoff oder Ammoniumcarbamat in fester oder in flüssiger Form bekannt.

Das Vorschalten eines Oxidationskatalysators ist vorteilhaft, wenn sich die Temperatur des Abgases zeitweise in einem Bereich unterhalb 250 °C bewegt. Bei einer solchen niedrigen Temperatur wirkt sich nämlich die Erhöhung des Stickstoffdioxid-Anteils durch den Oxidationskatalysator äußerst vorteilhaft auf den katalytischen Umsatz am Reduktionskatalysator aus.

Nachteiligerweise nimmt jedoch die Bildungsrate von Stickstoffdioxid NO₂ aus Stickstoffmonoxid NO am Oxidationskatalysator bei Temperaturen unterhalb 200 °C stark ab, so dass auch bei einer Kombination von Oxidationskatalysator und Reduktionskatalysator bei Temperaturen unterhalb 200 °C nur unzureichende Entstickungsraten erreicht werden.

Aufgabe der Erfindung ist es, ein Verfahren zur katalytischen Reduktion von Stickoxiden im Abgas einer Verbrennungsanlage anzugeben, mit welchem im Abgas enthaltene Stickoxide gemäß dem Verfahren der selektiven katalytischen Reduktion gegenüber einem vergleichbaren Verfahren des Standes der Technik bei niedrigen Temperaturen effektiver abgebaut werden. Weiter ist es Aufgabe der Erfindung, eine Abgasreinigungsanlage zur katalytischen Reduktion von Stickoxiden im Abgas einer Verbrennungsanlage anzugeben, die eine Anwendung des Verfahrens der selektiven katalytischen Reduktion noch bei tieferen Temperaturen erlaubt als eine vergleichbare Einrichtung des Standes der Technik.

Die erstgenannte Aufgabe wird für das eingangs genannte Verfahren zur katalytischen Reduktion von Stickoxiden im Abgas einer Verbrennungsanlage erfindungsgemäß dadurch gelöst, dass eine Abgastemperatur gemessen und mit einer Solltemperatur verglichen wird, und dass im Falle einer gegenüber der Solltemperatur niedrigeren Abgastemperatur das Reaktionsmittel dem Abgas vor Durchströmen des Oxidationskatalysators und im Falle einer gegenüber der Solltemperatur höheren Abgastemperatur nach Durchströmen des Oxidationskatalysators jedoch vor Durchströmen des Reduktionskatalysators zugegeben wird.

Die Erfindung geht dabei von der Überlegung aus, dass die Bildungsrate von Stickstoffdioxid NO₂ aus Stickstoffmonoxid NO an dem dem Reduktionskatalysator vorgeschalteten Oxidationskatalysator mit sinkenden Temperaturen ab etwa 250 °C abnimmt, so dass auch bei einer Kombination aus Oxidationskatalysator und Reduktionskatalysator in diesem unteren Temperaturbereich umso niedrigere Entstickungsraten erreicht werden je tiefer die Temperatur ist.

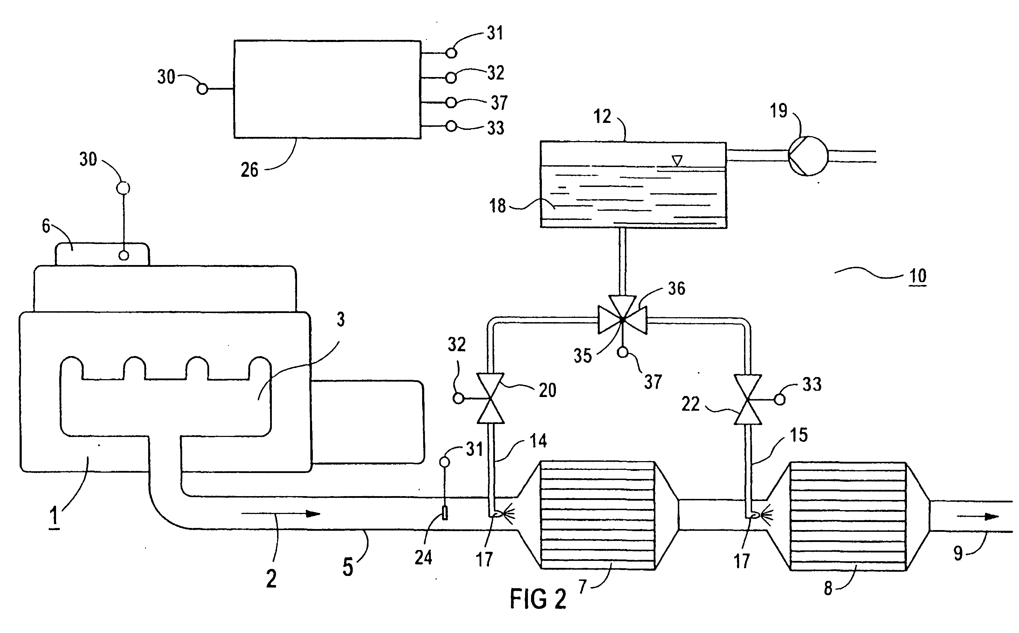

Weiter geht die Erfindung nun von der Erkenntnis aus, dass ein Oxidationskatalysator auf Basis von Platin sowie gegebenenfalls mit Beimengungen an Palladium und/oder Rhodium im Temperaturbereich von unterhalb etwa 250 °C eine katalytische Aktivität für den Abbau von Stickoxiden gemäß dem Verfahren der selektiven katalytischen Reduktion aufweist. Dies ist aus der Publikation von A.T. Krishnan und A.L. Boehman in Applied Catalysis B: Environmental Nr. 18, 1998, Seiten 189 bis 198, insbesondere Figur 2, bekannt. Unterhalb von etwa 250 °C steigt die Selektivität des Oxidationskatalysators für den katalytischen Umsatz gemäß dem Verfahren der selektiven katalytischen Reduktion von Stickoxiden in molekularen Stickstoff mit sinkenden Temperaturen an. Es ist aber auch zu entnehmen, dass - wie eingangs erwähnt - die Umsatzrate von NO allgemein an dem Oxidationskatalysator in besagtem Temperaturbereich mit sinkenden Temperaturen abfällt.

Die Erfindung geht nun ferner davon aus, dass die Aktivität des Oxidationskatalysators für den Abbau von Stickoxiden gemäß dem Verfahren der selektiven katalytischen Reduktion am Oxidationskatalysator dann genutzt werden kann, wenn bereits dort ein geeignetes Reduktionsmittel zur Verfügung steht. Hierfür wird ein Reaktionsmittel bereits stromauf des Oxidationskatalysators zugegeben. Dabei wird unter einem Reaktionsmittel sowohl das Reduktionsmittel selbst als auch alle das Reduktionsmittel freisetzenden übrigen Substanzen verstanden.

Da die Selektivität des Oxidationskatalysators für den Umsatz der Stickoxide zu molekularem Stickstoff bei Temperaturen oberhalb von 250 °C wieder gering ist und zudem in diesem Temperaturbereich der nachgeschaltete Reduktionskatalysator wieder effektiv arbeitet, wird die Abgastemperatur gemessen und mit einem Sollwert verglichen. Liegt der Sollwert unterhalb der Abgastemperatur, so wird die Zugabe des Reaktionsmittels von stromauf des Oxidationskatalysators zu stromab des Oxidationskatalysators und stromauf des Reduktionskatalysators verlagert.

Die Vorgabe einer Solltemperatur erlaubt eine an die spezifische Zusammensetzung des Oxidationskatalysators angepasste temperaturabhängige Verlagerung der Einbringstelle des Reaktionsmittels von stromauf zu stromab des Oxidationskatalysators. Die temperaturabhängige Selektivität des Oxidationskatalysators für den Umsatz von Stickoxiden in molekularen Stickstoff mittels eines im Abgas enthaltenen Reaktionsmittels weist nämlich eine Abhängigkeit von der Zusammensetzung des Oxidationskatalysators auf.

Mit einer Einbringung des Reaktionsmittels vor oder stromauf des Oxidationskatalysators lässt sich bei einer Abgasreinigungsanlage mit einer Kombination aus Oxidations- und Reduktionskatalysator in einem Temperaturbereich von unterhalb etwa 250 °C die Restaktivität des Oxidationskatalysators zum selektiven Abbau von Stickoxiden in molekularem Stickstoff nutzen und somit gegenüber einer vergleichbaren Abgasreinigungsanlage des Standes der Technik ein effektiverer Abbau der Stickoxide in diesem Temperaturbereich erzielen.

Vorteilhafterweise wird die Solltemperatur ausgewählt aus einem Temperaturbereich zwischen 150 °C und 250 °C. Unterhalb einer aus diesem Temperaturbereich ausgewählten Solltemperatur steigt für die meisten käuflich erwerbbaren Edelmetall-Oxidationskatalysatoren auf Basis von Platin mit moderater Aktivität die Selektivität hinsichtlich des Umsatzes von Stickoxiden zu Stickstoff an. Dies ist beispielsweise bei dem von Engelhard, USA, unter der Bezeichnung NOₓCat920LT erhältlichen Oxidationskatalysator der Fall. Oxidationskatalysatoren enthalten auf ihren dem Abgas zugänglichen Oberfläche 50 - 90 g/cf (cubic feet) Platin, typisch sind 70 g/cf.

In besonders vorteilhafter Ausgestaltung der Erfindung ist die Solltemperatur ausgewählt aus einem Temperaturbereich zwischen 190 °C und 210 °C. Dies ist insbesondere bei der Verwendung des Verfahrens für einen Dieselmotor von Vorteil. Es hat sich nämlich herausgesteilt, dass bei einer Abgastemperatur unterhalb einer aus diesem Bereich ausgewählten Solltemperatur bei den üblicherweise hinter einem Dieselmotor herrschenden Raumgeschwindigkeiten die Selektivität üblicher Edelmetall-Oxidationskatalysatoren für den Umsatz von Stickoxiden in molekularen Stickstoff steigt.

Vorteilhafterweise wird die Abgastemperatur im Abgas vor dem Durchströmen des Oxidationskatalysators gemessen.

Bevorzugt wird als Reaktionsmittel eine wässrige Harnstofflösung oder Ammoniakwasser über eine Einspritzdüse in das Abgas eingespritzt. Ein flüssiges Reaktionsmittel erlaubt gegenüber einem festen Reaktionsmittel eine einfachere Dosiertechnik. Gegenüber einem gasförmigen Reaktionsmittel ist ein flüssiges Reaktionsmittel zudem leichter handhabbar.

Selbstverständlich kann das Verfahren jedoch auch mit einem festen Reaktionsmittel wie Harnstoff oder anderen Ammoniak freisetzenden Substanzen durchgeführt werden. Auch die Eingabe von gasförmigem Ammoniak oder Ammoniak freigesetzt aus Ammoniumcarbamat ist vorstellbar. Ammoniak hat sich gegenüber anderen Reduktionsmitteln, wie z.B. Kohlenwasserstoffen, als am effektivsten für die Anwendung des Verfahrens der selektiven katalytischen Reduktion erwiesen.

Die zweitgenannte Aufgabe wird für eine Abgasreinigungsanlage der eingangs genannten Art erfindungsgemäß dadurch gelöst, dass die Einbringvorrichtung zum Einbringen des Reaktionsmittels in das Abgas eine erste Zugabeleitung und eine zweite Zugabeleitung umfasst, wobei die erste Zugabeleitung stromauf des Oxidationskatalysators und die zweite Zugabeleitung stromab des Oxidationskatalysators und stromauf des Reduktionskatalysators in den Abgaskanal mündet, und dass im Abgaskanal ein Temperatursensor angeordnet ist.

Vorteilhafterweise ist der Temperatursensor stromauf des Oxidationskatalysators angeordnet. In diesem Fall wird die Temperatur des Abgases nicht durch katalytische Reaktionen an den Katalysatoren beeinflusst.

In einer weiteren vorteilhaften Ausgestaltung der Erfindung umfasst die Eingabevorrichtung ein Reaktionsmittelreservoir, an welches die erste und die zweite Zugabeleitung direkt angeschlossen sind. In diesem Fall kann der Zufluss des Reaktionsmittels in der ersten und in der zweiten Zugabeleitung separat, d. h. unabhängig voneinander, gesteuert oder geregelt werden. Zur Steuerung oder Regelung des Reaktionsmittelzuflusses kann beispielsweise jeweils ein steuerbares Ventil in der ersten bzw. der zweiten Zugabeleitung angeordnet sein. Auch können im Falle der Verwendung eines festen Reaktionsmittels entsprechend ausgestaltete steuer- oder regelbare Dosiereinrichtungen am Ende oder in den Zugabeleitungen angeordnet sein.

In einer anderen vorteilhaften Ausgestaltung der Abgasreinigungsanlage umfasst die Eingabevorrichtung ein Reaktionsmittelreservoir, an welches eine Zufuhrleitung angeschlossen ist, die eine Verzweigung in die erste und in die zweite Zugabeleitung aufweist. In diesem Falle lässt sich die Zugabe des Reaktionsmittels durch eine einfache 3-Wege-Anordnung in der Verzweigung entweder in die erste oder in die zweite Zugabeleitung leiten. Die Auslösung für die Umleitung des Reaktionsmittels erfolgt wiederum durch den Temperatursensor. Im Falle eines flüssigen oder gasförmigen Reaktionsmittels lässt sich die Verzweigung in vorteilhafter Art und Weise als ein Dreiwegeventil ausgestalten.

Im Falle eines flüssigen oder gasförmigen Reaktionsmittels ist es von Vorteil, wenn die erste und die zweite Zugabeleitung jeweils über eine Einspritzdüse in den Abgaskanal münden. Bei der Einspritzdüse kann es sich entweder um eine Zweistoffdüse oder um eine Einstoffdüse handeln. Mit Hilfe einer Einspritzdüse kann die Zugabemenge des Reaktionsmittels in fein verteilter Form gezielt in eine Richtung eingegeben werden.

Ausführungsbeispiele der Erfindung werden anhand einer Zeichnung näher erläutert. Dabei zeigen
- FIG 1: schematisch eine Abgasreinigungsanlage mit einer ersten und einer zweiten direkt an ein Reaktionsmittelreservoir angeschlossenen Zugabeleitung, und
- FIG 2: schematisch eine Abgasreinigungsanlage mit einer in einer an ein Reduktionsmittelreservoir angeschlossenen Zufuhrleitung angeordneten Verzweigung in eine erste und in eine zweite Zugabeleitung.

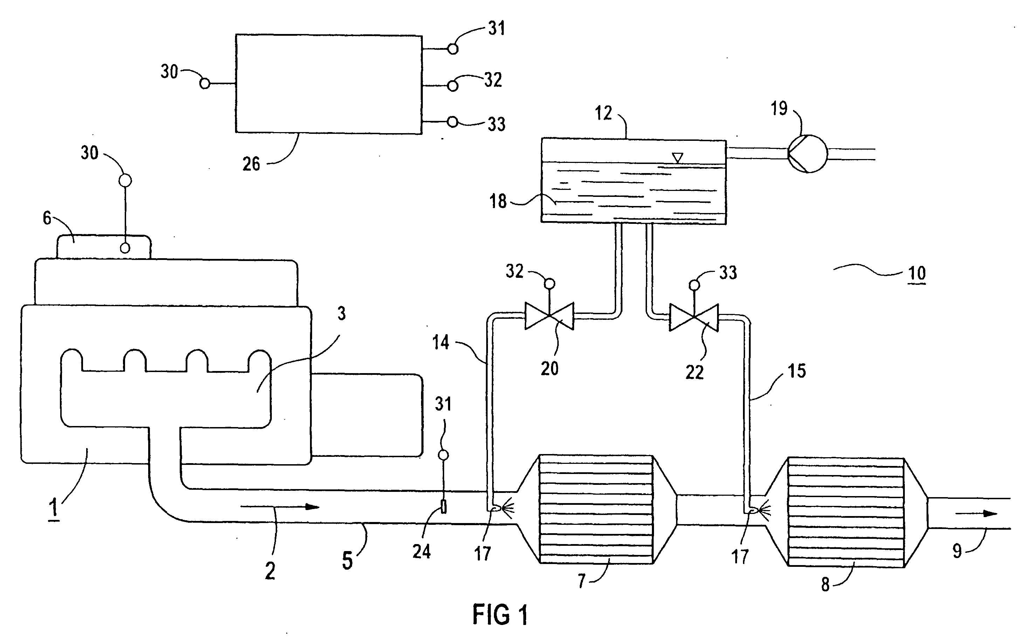

FIG 1 zeigt schematisch eine Abgasreinigungsanlage für eine Verbrennungsanlage 1, welche im gezeigten Fall als Dieselmotor ausgestaltet ist. Das Abgas 2 der Verbrennungsanlage 1 verlässt den Dieselmotor durch einen Auspuffkrümmer 3 und gelangt über einen Abgaskanal 5 in die Umwelt. Der Dieselmotor verfügt über eine Motorsteuerung 6, die über eine Schnittstelle 30 betriebsrelevante Parameter des Dieselmotors, wie Regelstangenweg, Drehzahl, Drehmoment oder Einspritzzeitpunkt zur Verfügung stellt.

Im Abgaskanal 5 ist ein Oxidationskatalysator 7 und stromab von diesem ein Reduktionskatalysator 8 angeordnet. Beide Katalysatoren 7 und 8 sind jeweils als durchströmbare Wabenkörper mit einer Anzahl von parallelen Strömungskanälen ausgebildet. Der Oxidationskatalysator 7 weist auf seiner dem Abgas 2 zugänglichen Oberfläche 50 - 90 g/cf Platin auf. Der Katalysatorträger selbst ist aus einer thermisch und mechanisch stabilen Keramik, z.B. Cordierit, oder aus Metall. Der Reduktionskatalysator 8 ist als Vollextrudat aus einer Keramikmasse mit 70 bis 95 Gew.-% Titandioxid, 5 bis 20 Gew. -% Wolframtrioxid und/oder Molybdäntrioxid und weniger als 5 Gew.-% Vanadiumpentoxid hergestellt. Selbstverständlich können beide Katalysatoren 7 und 8 auch als Plattenkatalysatoren mit entsprechend katalytischer Beschichtung hergestellt sein.

Nach Verlassen der Verbrennungsanlage 1 durchströmt das Abgas 2 zunächst den Oxidationskatalysator 7, anschließend den Reduktionskatalysator 8 und wird schließlich über den Auspuff 9 an die Umwelt abgegeben. Am Oxidationskatalysator 7 wird dabei primär Stickstoffmonoxid NO in Stickstoffdioxid NO₂ umgesetzt. Am Reduktionskatalysator 8 erfolgt die Umsetzung der Stickstoffoxide mit nun erhöhtem Anteil an Stickstoffdioxid NO₂ in Gegenwart eines Reaktionsmittels zu molekularem Stickstoff N₂ und Wasser H₂O.

Zur Einbringung des Reaktionsmittels in das Abgas 2 ist eine Einbringvorrichtung 10 vorhanden. Die Einbringvorrichtung 10 umfasst ein Reaktionsmittelreservoir 12 sowie eine erste Zugabeleitung 14 und eine zweite Zugabeleitung 15, welche beide direkt an das Reaktionsmittelreservoir 12 angeschlossen sind. Beide Zugabeleitungen 14 und 15 münden in jeweils eine Einspritzdüse 17. Dabei mündet die erste Zugabeleitung 14 stromauf des Oxidationskatalysators 7 und die zweite Zugabeleitung 15 stromauf des Reduktionsmittelkatalysators 8 und stromab des Oxidationskatalysators 7. Als Reaktionsmittel selbst befindet sich in dem Reaktionsmittelreservoir 12 eine wässrige Harnstofflösung 18 bekannter Konzentration.

Über einen Verdichter 19 wird der Reaktionsmittelbehälter 12 unter Druck gesetzt, so dass bei Öffnen des ersten Stellventils 20 die wässrige Harnstofflösung 18 über die erste Zugabeleitung 14 stromauf des Oxidationskatalysators 7 in das Abgas 2 und bei Öffnen des zweiten Stellventils 22 über die zweite Zugabeleitung 15 in das Abgas stromauf des Reduktionskatalysators 8 und stromab des Oxidationskatalysators 7 in das Abgas 2 eingebracht wird.

Zusätzlich ist stromauf des Oxidationskatalysators 7 ein Temperatursensor 24 in dem Abgaskanal 5 angeordnet.

Die Dosierung der wässrigen Harnstofflösung 18 geschieht mittels einer Dosiersteuerung 26, die über die Schnittstellen 30, 31, 32 und 33 mit den Ausgängen der Motorsteuerung 6, des Temperatursensors 24, des ersten Stellventils 20 bzw. des zweiten Stellventils 22 verbunden ist. Über die Schnittstelle 30 empfängt die Dosiersteuerung 26 die bereits erwähnten betriebsrelevanten Parameter der Verbrennungsanlage 1. Aus diesen betriebsrelevanten Parametern wird mittels eines in der Dosiersteuerung 26 implementierten Kennfeldes eine entsprechend dem zu erwartenden Stickoxid-Ausstoß einzugebende Reaktionsmittel-Menge errechnet und entsprechend dieser Menge die Öffnungszeit des ersten oder des zweiten Stellventils 20 bzw. 22 gesteuert.

Weiter wird in der Dosiersteuerung 26 mittels des Abgassensors 24 die aktuelle Abgastemperatur ermittelt und mit einer implementierten Solltemperatur verglichen. Im vorliegenden Fall ist die implementierte Solltemperatur auf 200 °C eingestellt. Liegt die Abgastemperatur unterhalb der Solltemperatur, so bleibt das Stellventil 22 geschlossen. Die pro Zeiteinheit einzubringende Menge der wässrigen Harnstofflösung 18 wird allein über eine Steuerung des ersten Stellventils 20 stromauf des Oxidationskatalysators 7 in das Abgas 2 eingebracht. Liegt die Abgastemperatur oberhalb der Solltemperatur, so bleibt das erste Stellventil 20 geschlossen und die pro Zeiteinheit einzubringende Menge der wässrigen Harnstofflösung 18 wird über das zweite Stellventil 22 stromab des Oxidationskatalysators 7 und stromauf des Reduktionskatalysators 8 in das Abgas 2 eingebracht. Bei einem Wechsel der Abgastemperatur von oberhalb der Solltemperatur zu unterhalb der Solltemperatur oder umgekehrt kann auch eine allmähliche, weiche Zurücknahme der Eingabemenge des Reaktionsmittels in der zweiten und eine allmähliche, weiche Erhöhung der Eingabemenge des Reaktionsmittels in der ersten Zugabeleitung 14 bzw. umgekehrt erfolgen. Mit anderen Worten gibt es einen Temperaturbereich, innerhalb dessen das Reaktionsmittel sowohl durch die erste 14 als auch durch die zweite Zugabeleitung 15 strömt. Es findet eine allmähliche Verlagerung des Eingabeortes des Reaktionsmittels statt.

In FIG 2 ist eine Abgasreinigungsanlage ähnlich der Abgasreinigungsanlage in FIG 1 dargestellt. Im Gegensatz dazu ist jedoch bei der in FIG 2 dargestellten Abgasreinigungsanlage an das Reaktionsmittelreservoir 12 eine einzige Zufuhrleitung 24 angeschlossen, welche eine Verzweigung 35 in die erste und in die zweite Zugabeleitung 14 bzw. 15 aufweist. Die Verzweigung 35 selbst ist als ein Dreiwegeventil 36 ausgestaltet, welches den Zufluss der wässrigen Harnstofflösung 18 entweder in die erste Zugabeleitung 14 oder in die zweite Zugabeleitung 15 erlaubt. Die Steuerung des Dreiwegeventils 35 erfolgt über eine Schnittstelle 37 mittels der Dosiersteuerung 26. Bei einer Abgastemperatur unterhalb der Solltemperatur fließt die wässrige Harnstofflösung 18 über die erste Zugabeleitung 14, während bei einer Abgastemperatur oberhalb der Solltemperatur die wässrige Harnstofflösung 18 über die zweite Zugabeleitung 15 fließt.

## Patentansprüche

1. Verfahren zur katalytischen Reduktion von Stickoxiden im Abgas einer Verbrennungsanlage (1) wobei das Abgas (2) zuerst über einen Oxidationskatalysator (7), der auf seiner dem Abgas (2) zugänglichen Oberfläche Pt sowie gegebenenfalls Pd und/oder Rh umfasst, und anschließend über einen Reduktionskatalysator (8), der auf seiner dem Abgas (2) zugänglichen Oberfläche TiO₂, WO₃, V₂O₅ sowie gegebenenfalls MoO₃ umfasst, strömt, und wobei dem Abgas (2) ein Reaktionsmittel zugegeben wird,
**dadurch gekennzeichnet, dass** eine Abgastemperatur gemessen und mit einer Solltemperatur verglichen wird, und dass im Falle einer gegenüber der Solltemperatur niedrigeren Abgastemperatur das Reaktionsmittel dem Abgas (2) im Wesentlichen vor Durchströmen des Oxidationskatalysators (7) und im Falle einer gegenüber der Solltemperatur höheren Abgastemperatur im Wesentlichen nach Durchströmen des Oxidationskatalysators (7) jedoch vor Durchströmen des Reduktionskatalysators (8) zugegeben wird.

2. Verfahren nach Anspruch 1,
**dadurch gekennzeichnet, dass** die Solltemperatur ausgewählt ist aus einem Temperaturbereich zwischen 150 °C und 250 °C.

3. Verfahren nach Anspruch 2,
**dadurch gekennzeichnet, dass** die Solltemperatur ausgewählt ist aus einem Temperaturbereich zwischen 190 °C und 210 °C.

4. Verfahren nach einem der Ansprüche 1 bis 3,
**dadurch gekennzeichnet, dass** die Abgastemperatur im Abgas (2) vor dem Durchströmen des Oxidationskatalysators (7) gemessen wird.

5. Verfahren nach einem der Ansprüche 1 bis 4,
**dadurch gekennzeichnet, dass** als Reaktionsmittel eine wässrige Harnstofflösung (18) oder Ammoniakwasser über eine Einspritzdüse (17) in das Abgas (2) eingespritzt wird.

6. Abgasreinigungsanlage zur Durchführung des Verfahrens nach einem der Ansprüche 1 bis 5, mit einem Abgaskanal (5), mit einem Reduktionskatalysator (8), mit einem stromauf des Reduktionskatalysators (8) angeordneten Oxidationskatalysator (7), und mit einer Einbringvorrichtung (10) zum Einbringen eines Reaktionsmittels in das Abgas (2), wobei der Oxidationskatalysator (7) auf seiner dem Abgas (2) zugänglichen Oberfläche Pt sowie gegebenenfalls Pd und/oder Rh und der Reduktionskatalysator (8) auf seiner dem Abgas (2) zugänglichen Oberfläche TiO₂, WO₃, V₂O₅ sowie gegebenenfalls MoO₃ umfasst,
**dadurch gekennzeichnet, dass** die Einbringvorrichtung (10) zum Einbringen des Reaktionsmittels in das Abgas (2) eine erste Zugabeleitung (14) und eine zweite Zugabeleitung (15) umfasst, wobei die erste Zugabeleitung (14) stromauf des Oxidationskatalysators (7) und die zweite Zugabeleitung (15) stromab des Oxidationskatalysators (7) und stromauf des Reduktionskatalysators (8) in den Abgaskanal (5) mündet, und dass im Abgaskanal (5) ein Temperatursensor (14) angeordnet ist.

7. Abgasreinigungsanlage nach Anspruch 6,
**dadurch gekennzeichnet, dass** der Temperatursensor (14) stromauf des Oxidationskatalysators (7) angeordnet ist.

8. Abgasreinigungsanlage nach Anspruch 6 oder 7,
**dadurch gekennzeichnet, dass** die Eingabevorrichtung (10) ein Reaktionsmittelreservoir (12) umfasst, an welches die erste und die zweite Zugabeleitung (14, 15) direkt angeschlossen sind.

9. Abgasreinigungsanlage nach Anspruch 6 oder 7,
**dadurch gekennzeichnet, dass** die Eingabevorrichtung (10) ein Reaktionsmittelreservoir (12) umfasst, an welches eine Zufuhrleitung (34) angeschlossen ist, und dass die Zufuhrleitung (34) eine Verzweigung (35) in die erste Zugabeleitung (14) und in die zweite Zugabeleitung (15) aufweist.

10. Abgasreinigungsanlage nach Anspruch 9,
**dadurch gekennzeichnet, dass** die Verzweigung (35) als ein Dreiwegeventil (36) ausgestaltet ist.

11. Abgasreinigungsanlage nach einem der Ansprüche 6 bis 10,
**dadurch gekennzeichnet, dass** die erste und die zweite Zugabeleitung (14, 15) jeweils über eine Einspritzdüse (17) in den Abgaskanal (5) münden.

## Claims

1. Process for the catalytic reduction of nitrogen oxides in the exhaust gas from a combustion system (1), in which the exhaust gas (2) first of all flows over an oxidation catalytic converter (7), which on its surface which is accessible to the exhaust gas (2) comprises Pt and if appropriate Pd and/or Rh, and then flows over a reduction catalytic converter (8), which on its surface which is accessible to the exhaust gas (2) comprises TiO₂, WO₃, V₂O₅ and if appropriate MoO₃, and in which a reagent is added to the exhaust gas (2), **characterized in that** an exhaust-gas temperature is measured and is compared with a set temperature, and **in that** in the case of an exhaust-gas temperature which is lower than the set temperature the reagent is added to the exhaust gas (2) substantially before it flows through the oxidation catalytic converter (7), and in the case of an exhaust-gas temperature which is higher than the set temperature the reagent is added to the exhaust gas substantially after it has flowed through the oxidation catalytic converter (7) but before it flows through the reduction catalytic converter (8).

2. Process according to Claim 1, **characterized in that** the set temperature is selected from a temperature range between 150°C and 250°C.

3. Process according to Claim 2, **characterized in that** the set temperature is selected from a temperature range between 190°C and 210°C.

4. Process according to one of Claims 1 to 3, **characterized in that** the exhaust-gas temperature is measured in the exhaust gas (2) before it flows through the oxidation catalytic converter (7).

5. Process according to one of Claims 1 to 4, **characterized in that** an aqueous urea solution (18) or aqueous ammonia is injected as reagent into the exhaust gas (2) via an injection nozzle (17).

6. Exhaust-cleaning system for carrying out the process according to one of Claims 1 to 5, having an exhaust pipe (5), having a reduction catalytic converter (8), having an oxidation catalytic converter (7) arranged upstream of the reduction catalytic converter (8), and having an introduction device (10) for introducing a reagent into the exhaust gas (2), the oxidation catalytic converter (7), on its surface which is accessible to the exhaust gas (2), comprising Pt and if appropriate Pd and/or Rh, and the reduction catalytic converter (8), on its surface which is accessible to the exhaust gas (2), comprising TiO₂, WO₃, V₂O₅ and if appropriate MoO₃, **characterized in that** the introduction device (10) for introducing the reagent into the exhaust gas (2) comprises a first addition line (14) and a second addition line (15), the first addition line (14) opening out into the exhaust pipe (5) upstream of the oxidation catalytic converter (7) and the second addition line (15) opening out into the exhaust pipe (5) downstream of the oxidation catalytic converter (7) and upstream of the reduction catalytic converter (8), and **in that** a temperature sensor (14) is arranged in the exhaust pipe (5).

7. Exhaust-cleaning system according to Claim 6, **characterized in that** the temperature sensor (14) is arranged upstream of the oxidation catalytic converter (7).

8. Exhaust-cleaning system according to Claim 6 or 7, **characterized in that** the introduction device (10) comprises a reagent reservoir (12), to which the first and second addition lines (14, 15) are directly connected.

9. Exhaust-cleaning system according to Claim 6 or 7, **characterized in that** the introduction device (10) comprises a reagent reservoir (12), to which a feed line (34) is connected, and **in that** the feed line (34) has a branch (35) leading into the first addition line (14) and into the second addition line (15).

10. Exhaust-cleaning system according to Claim 9, **characterized in that** the branch (35) is designed as a three-way valve (36).

11. Exhaust-cleaning system according to one of Claims 6 to 10, **characterized in that** the first addition line (14) and the second addition line (15) each open out into the exhaust pipe (5) via an injection nozzle (17).

## Revendications

1. Procédé pour la réduction catalytique d'oxydes azotiques contenus dans les gaz d'échappement d'une installation à combustion (1), les gaz d'échappement (2) s'écoulant tout d'abord sur un catalyseur d'oxydation (7) comprenant sur sa surface accessible aux gaz d'échappement (2) du Pt ainsi que le cas échéant du Pd et/ou du Rh, et ensuite sur un catalyseur de réduction (8) comprenant sur sa surface accessible aux gaz d'échappement (2) du TiO₂, WO₃, V₂O₅ ainsi que le cas échéant du MoO₃, un agent réactif étant ajouté aux gaz d'échappement (2), **caractérisé en ce que** l'on mesure une température des gaz d'échappement et on la compare avec une température de consigne, et **en ce que** dans le cas où la température des gaz d'échappement est inférieure à la température de consigne, on ajoute l'agent réactif aux gaz d'échappement (2) sensiblement avant écoulement à travers le catalyseur d'oxydation (7) et dans le cas où la température des gaz d'échappement est supérieure à la température de consigne, on l'ajoute sensiblement après écoulement à travers le catalyseur d'oxydation (7) mais avant écoulement à travers le catalyseur de réduction (8).

2. Procédé selon la revendication 1, **caractérisé en ce que** la température de consigne est choisie dans une plage de température comprise entre 150°C et 250°C.

3. Procédé selon la revendication 2, **caractérisé en ce que** la température de consigne est choisie dans une plage de température comprise entre 190°C et 210°C.

4. Procédé selon l'une des revendications 1 à 3, **caractérisé en ce que** l'on mesure la température des gaz d'échappement (2) avant écoulement à travers le catalyseur d'oxydation (7).

5. Procédé selon l'une des revendications 1 à 4, **caractérisé en ce qu'**à titre d'agent réactif, on injecte une solution aqueuse d'urée (18) ou de l'eau ammoniacale dans les gaz d'échappement (2) via une buse d'injection (17).

6. Installation de purification de gaz d'échappement pour mettre en oeuvre le procédé selon l'une des revendications 1 à 5, comportant un canal à gaz d'échappement (5), un catalyseur de réduction (8), un catalyseur d'oxydation (7) agencé en amont du catalyseur de réduction (8), et comportant un dispositif d'introduction (10) pour introduire un agent réactif dans les gaz d'échappement (2), le catalyseur d'oxydation (7) comprenant sur sa surface accessible aux gaz d'échappement (2) du Pt ainsi que le cas échéant du Pd et/ou du Rh, et le catalyseur de réduction (8) comprenant sur sa surface accessible aux gaz d'échappement (2) du TiO₂, WO₃, V₂O₅ ainsi que le cas échéant du MoO₃, **caractérisée en ce que** le dispositif d'introduction (10) pour introduire l'agent réactif dans les gaz d'échappement (2) comprend une première conduite d'apport (14) et une deuxième conduite d'apport (15), la première conduite d'apport (14) débouchant dans le canal à gaz d'échappement (5) en amont du catalyseur d'oxydation (7) et la deuxième conduite d'apport (15) débouchant dans le canal à gaz d'échappement (5) en aval du catalyseur d'oxydation (7) et en amont du catalyseur de réduction (8), et **en ce qu'**un détecteur de température (14) est agencé dans le canal à gaz d'échappement (5).

7. Installation de purification de gaz d'échappement selon la revendication 6, **caractérisée en ce que** le détecteur de température (14) est agencé en amont du catalyseur d'oxydation (7).

8. Installation de purification de gaz d'échappement selon l'une ou l'autre des revendications 6 et 7, **caractérisée en ce que** le dispositif d'introduction (10) comprend un réservoir à agent réactif (12) auquel sont raccordées directement la première et la deuxième conduite d'apport (14, 15).

9. Installation de purification de gaz d'échappement selon l'une ou l'autre des revendications 6 et 7, **caractérisée en ce que** le dispositif d'introduction (10) comprend un réservoir à agent réactif (12) auquel est raccordée une conduite d'alimentation (34), et **en ce que** la conduite d'alimentation (34) comprend une ramification (35) vers la première conduite d'apport (14) et vers la deuxième conduite d'apport (15).

10. Installation de purification de gaz d'échappement selon la revendication 9, **caractérisée en ce que** la ramification (35) est réalisée sous forme de valve à trois voies (36).

11. Installation de purification de gaz d'échappement selon l'une des revendications 6 à 10, **caractérisée en ce que** la première et la deuxième conduite d'apport (14, 15) débouchent chacune via une buse d'injection (17) dans le canal à gaz d'échappement (5).
